# EUROPEAN PATENT APPLICATION

(11) **EP 2 065 795 A1**
(43) Date of publication of application: **03.06.2009**
(21) Application number: 07023244.2
(22) Date of filing: 30.11.2007
(51) Int. Cl.: G06F 3/048

(54) **Auto zoom display system and method**

(71) Applicant: Koninklijke KPN N.V., 2516 CK The Hague (NL)
(72) Inventor: Alberts, Albert Willem, 9751 TC Hazen (NL); Van Steenbergen, Ate Sander, 9737 NN Groningen (NL)
(74) Representative: Wuyts, Koenraad Maria

(57) **Abstract**

Auto zoom display system and method for user interaction with a display screen (1; 11). The auto zoom display system has a display screen (1; 11) for displaying an image, and a viewing distance detector (2; 12). The display screen (1; 11) and viewing distance detector (2; 12) are connected to a processing system (3), the processing system (3) being arranged to detect a viewing distance between a user (15) and the display screen (1; 11). Furthermore, a zoom property of the displayed image is adjusted depending on the detected viewing distance.

## Description

### Field of the invention

The present invention relates to a method for user interaction with a display screen, the display screen displaying an image, e.g. a computer generated image. Furthermore, the present application relates to an auto zoom display system, comprising a display screen for displaying an image, and a viewing distance detector.

### Prior art

American patent publication US2007/0159470 discloses an apparatus for automatically adjusting display parameters relying on visual performance. A visual performance detecting system is used to detect a change in viewing distance, blinking rate or eye movement velocity. Depending on the detected parameters, global display properties, such as brightness, contrast, font, font size are adjusted.

### Summary of the invention

The present invention seeks to provide an improved display adjustment system and method which provides ease of working behind a display screen.

According to the present invention, a method according to the preamble defined above is provided, in which the method comprises detection of a viewing distance between a user and the display screen, and adjustment of a zoom property of the displayed image depending on the detected viewing distance. In a further embodiment, the parameter used may be a change in viewing distance, rather than the viewing distance itself. The zoom property may be a zoom factor associated with an operating system to adjust the entire display screen (e.g. using the zoom function available in an operating system such as Mac OS X), or a zoom factor which is associated with at least one computer applications (e.g. a computer generated image on (a part of) the display screen in windows). As viewing distance between user and display screen is used to control the zoom property, a very user friendly and instinctive control of the display screen is provided.

In a further embodiment, detection of the viewing distance comprises checking whether attention of the user is focused on the display screen (e.g. using eye measurements). In this case, inadvertent movements of the user while not looking at the display screen do not result in any (undesired) zoom actions.

In a further embodiment the adjustment of a zoom property comprises zooming in when the detected viewing distance is lower than a first threshold distance, and zooming out when detected distance is higher than a second threshold distance. This implementation of a hysteresis will result in a more predictable and user friendly operation. In an even further embodiment, the adjustment of a zoom property further comprises stop zooming when the detected viewing distance is within a predetermined distance range around a calibrated viewing distance. This furthermore improves the user friendly operation of the present method.

The detection of a viewing distance comprises in an embodiment, acquiring a pixel image from the user, and processing the pixel image to obtain the viewing distance. This may e.g. be implemented using a digital camera and an associated image processing system. Processing the pixel image may comprise measuring pixel distances of body parameters of the user, such as body width (shoulder, body) or head width.

In a further embodiment, the detection of a viewing distance comprises acquiring a pixel image from the user, and processing the pixel image to check whether a detected face part location is within predetermined boundaries of a face part location (e.g. the eyes, or the eyes relative to the nose). This may then be used to trigger the zoom actions only when the user is looking at the display screen.

In a further aspect, the present invention relates to an auto zoom system as defined above, in which the display screen and viewing distance detector are connected to a processing system, the processing system being arranged to detect a viewing distance between a user and the display screen, and to adjust a zoom property of the displayed image depending on the detected viewing distance. The other functionalities as described with reference to the various method embodiments above may also be implemented as part of the processing system. For some embodiments, the viewing distance detector is a camera co-located with the display screen and connected to the processing system.

### Short description of drawings

The present invention will be discussed in more detail below, using a number of exemplary embodiments, with reference to the attached drawings, in which
Fig. 1 shows a schematic diagram of a hardware embodiment in which the present invention may be implemented;
Fig. 2 shows a schematic drawing of an embodiment of the detector of Fig. 1;
Fig. 3 shows a flow diagram of an embodiment of a method according to the present invention;
Fig. 4 shows a schematic view of a typical set-up for application of embodiments of the present invention;
Fig. 5 shows schematically the determination of viewing distance parameters according to an embodiment of the present invention;
Fig. 6 shows schematically the determination of attention focus of a user according to an embodiment of the present invention.

### Detailed description of exemplary embodiments

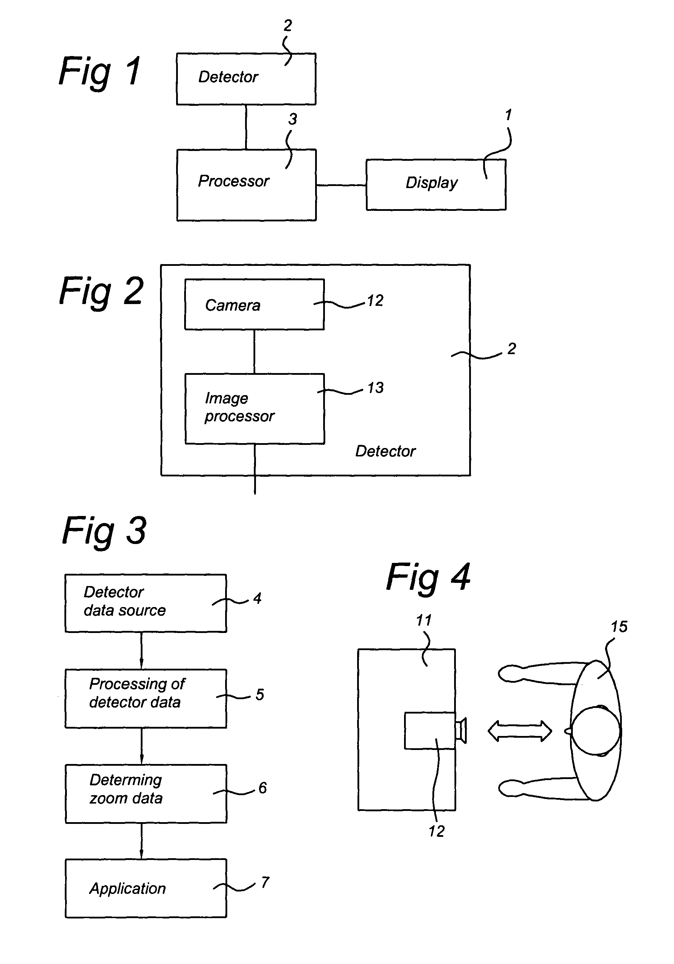

When a user 15 works behind a display screen or monitor 1 of a computer (see Fig. 4) which displays a (computer generated) image for at least one computer application (e.g. using windows), the user 15 unconsciously moves forward and back from a "normal" position in order to see more details. The user 15 moves forward when in need for more details and moves backward when in need of more overview. The present invention embodiments solve the problem of moving back and forward excessively by using the natural movements of the user 15 and a detector such as a camera 12 to adjust the display or application settings.

The term 'image' is used in a broad sense, and may be a static image, but also a video sequence, text, a dynamic game image, a movie, TV images, etc.

In Fig. 1, a schematic diagram is shown of a hardware embodiment of the present invention. A display screen 1 is controlled by a processor 3 (e.g. as part of a computer system) and a detector 2 for measuring a viewing distance between a user 15 and the screen of the display screen 1 is connected to the processor 3.

The detector 2 may be arranged to measure a distance, e.g. using a laser or ultrasonic distance detector, which as such are known to the skilled person. In a further embodiment, the detector 2 may be arranged to detect or determine a change in viewing distance (relative measurement) in stead of an absolute viewing distance.

The viewing distance detector 2 may, in a further exemplary embodiment, be implemented as a camera 12 connected to an image processor 13, as depicted schematically in Fig. 2. The camera 12 (co-located with the display screen 1) captures an image of a user 15 in front of the screen of the display 1, and the acquired image is processed in order to determine a viewing distance value or a change in viewing distance. This is then used as input to the processor 3 in order to set a zoom property or parameter for one or more of the applications being executed in the processor 3 and displayed on the display 1.

In Fig. 3, a flow chart is shown illustrating the various steps of an embodiment of the present invention. In step 4, detector source data is acquired, e.g. an image captured by camera 12. Subsequently, in step 5, this detector data is processed in order to e.g. determine a viewing distance between a user 15 and the display 1. Then, in step 6, from the viewing distance, zoom data is determined which is usable by an application being executed by the processor 3 to adjust a zoom property thereof. The zoom property may be dependent on or associated with the at least one computer application which generates the computer generated image, or associated with a function of an operating system. In step 7, this zoom data is used to control the user interface display of the application, e.g. a window size on the display 1, or zooming of the entire display screen 1. Furthermore, the zoom data may be used to control an application specific zoom, e.g. the zoom percentage selection which is available in office applications (drop down box with different percentages).

In Fig. 4, a top view is shown of a person or user 15 sitting behind a monitor or display screen 1, in a normal position. A camera 12 is shown, which is used as detector 2 for detecting the viewing distance of the user 15 to the display screen 1. If the user 15 wants to zoom in, the user 15 tilts his torso towards the camera 12 (indicated by the arrow), and the camera 12 (and associated image processor 13) detects the movement of e.g. the head of the user 15. The software application being executed on the computer (or processor 3) and displayed on the display screen 1 zooms in by using an application specific zoom function. Zooming in stops as soon as the user 15 moves back towards the normal position, i.e. when the user 15 is within a predetermined distance range around a normal (or calibrated) viewing distance.

If the user 15 wants to zoom out, the user 15 tilts his torso away from the camera 12, and the camera 12 and associated image processor 13 detect the movement of the head. The application or the entire display on the computer 3 zooms out by using the application specific zoom function. Zooming out action stops as soon as the user moves back towards the normal position.

In a further embodiment, forward and backward movements of the user 15 are only handled as zoom actions when the user 15 looks at the display screen 1, i.e. when the attention of the user 15 is focused on the display screen 1. Without this, movements of the user 15 are ignored. For example irregular movements as reseating, nodding or yawning are ignored.

Before the user 15 can use this system the "normal" or "calibrated" position has to be determined. In other words the system has to be calibrated. The minimal movement to trigger a zoom action and the zoom factor is a configurable system setting, initially with a default value.

An implementation of the present invention may take the form of a combination of hardware and software. Hardware is provided to record the user's "movements" and software is provided to process the detected data and to perform the zoom action.

As described above, in a specific embodiment, the hardware is in the form of a camera 12 (or webcam) that is connected to the computer 3. The software is an application that consists of two different functional parts, e.g. in the form of executables or software modules. A first part processes the data from the camera 12, and is e.g. implemented in the image processor 13. This first part of the software determines if there is user movement and if this user movement should be handled as a zoom action.

The second part of the software activates the zoom function of the display screen 1. Zoom functionality can be handled in two different ways:
- System wide or display zoom: in this case, the whole screen and all displayed content is enlarged when zooming in. E.g. Mac OS X operating system has a zoom function like this. The display zoom is a very useful for visually impaired users. This is also called the accessibility mode.
- Application based zoom, the zoom in and zoom out settings are application specific. Office applications like Word and Excel have the possibility to zoom in and out of the application content. The "workspace" will be enlarged or decreased in size while the window, menu's and toolbars remain the same size. This is the application mode. The application mode and the different ways on how to interact with the system to perform the zoom action are stored with the application.

The first part of the software may be implemented on the image processor 13, while the second part may be implemented as an application or module being executed by the processor 3. However, it is also possible to provide the entire functionality of the software part of the present invention in the image processor 13 alone, or in the processor 3 alone, provided the interfacing with the camera 12 (detector 2) and the display 1 is adapted accordingly.

The normal situation (i.e. the normal distance between user 15 and display screen 1) is determined in a calibration procedure. In the calibration procedure, a calibrated viewing distance is determined, and possibly also it is determined whether the attention of the user 15 is focussed at the display screen 1.

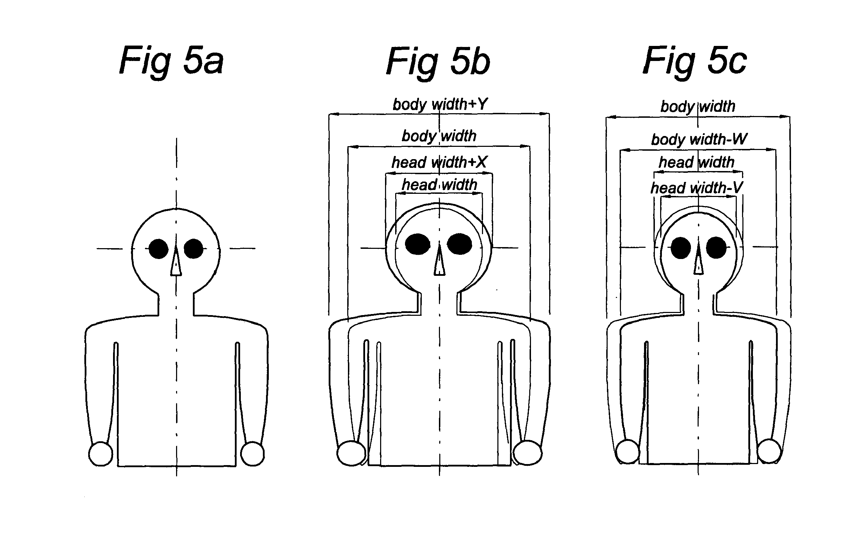

In an embodiment, the viewing distance is determined using a pixel image of the user 15, as depicted in Fig. 5a to 5c. A default size of the body and/or the head is determined (e.g. using contour detection or pixel colour detection, indicated by body width and head width in Fig. 5b).

To determine a "zoom-in" situation, which is depicted in Fig. 5b, the increase in size of the head and/or body of the user 15 is measured (e.g. counting pixels) and compared to the default size of the calibrated normal situation (in Fig. 5b values X and Y represent the increase in head width and body width, respectively). While the user 15 is in the "zoom in" position the program (second software part) will be zooming in until a maximum zoom level is reached. To determine a "zoom out" situation the decrease in size of the head and/or body width are measured and compared to the default sizes in the normal situation (in Fig. 5c values V and W represent the decrease in head width and body width, respectively). While the user 15 is in the "zoom out" position the program (second software part) will be zooming out until the minimum zoom level is reached. The increase or decrease in head and/or body width are inversely linear with the viewing distance between user 15 and display screen 1, and thus viewing distance and body width or head width are unambiguously related.

The zooming in and zooming out actions may be dependent on a first and second threshold value, respectively, to prevent that a small movement of the user 15 results in an (undesired) zoom action. Furthermore, when zooming in or zooming out has been initiated, it can be stopped when the user 15 returns to within a predetermined distance range around the calibrated viewing distance.

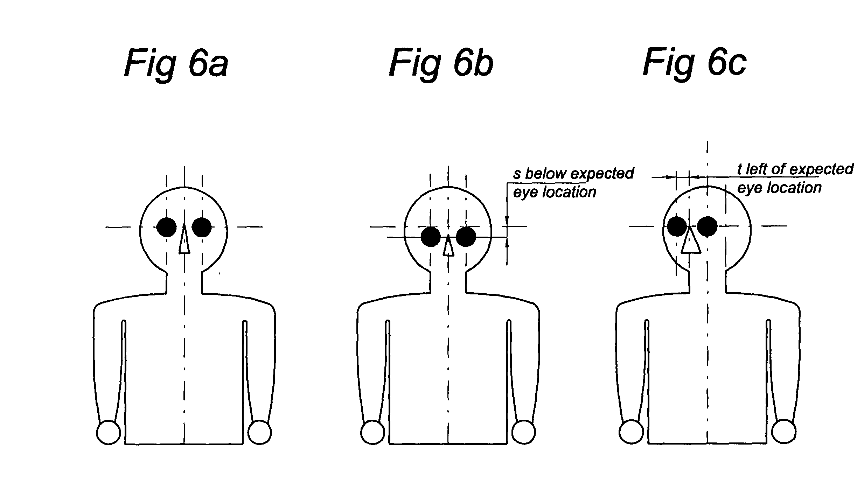

When the user 15 is not looking at the display screen 1 the zoom in and zoom out situations will not be triggered. Detecting whether the user's attention is focused at the display screen 1 (i.e. whether or not the user 15 is looking at the display screen 1) is determined from the position of characteristic face parts, such as the eyes and the nose, as determined by the image processing, compared to a "normal" situation (calibrated face part location) determined in a calibration procedure. This is graphically represented in Fig. 6a-c. In principle the values s (the position of the eyes below or above the normal position) and/or t (the position left or right from the normal position) should be within predetermined boundaries (i.e. a certain distance range around the calibrated distance) to trigger the zoom in or zoom out action as described above.

The calibration of the parameters used for determining the viewing distance and the attention is based on detecting movement. In an exemplary embodiment, the calibration is implemented as a separate software module or executable on image processor 13 and/or processor 3. When the AutoZoom program is activated, a menu is displayed on the display screen 1 with a message 'Sit in default position, look at this point, and press enter'. If the user 15 presses enter, a still image is made by the camera 12. Image recognition algorithms may be used to determine the body contour parameters, such as body width, shoulder width and eye position from the image as depicted in Fig. 5a).

After this, the menu may be refreshed to display the message 'Bow forward 10 cm, look at this point, and press enter'. Again a still image is made by the camera 12 and processed to obtain the parameters Y and X (see Fig. 5b). Once again, the menu is refreshed to display the message 'Bow backward 10 cm, look at this point and press enter'. A still image is made by the camera 12 and analysed to obtain the parameters V and W (see Fig. 5c).

Subsequently, the menu may be refreshed and display a message requesting input on the percentage of zoom desired in the two extreme positions (i.e. a zoom factor Z). The user 15 can then input this parameter, e.g. 30%, as a general parameter, or the user may input the zoom factor as a function of the application being executed by the processor 3 and displayed on display 1, e.g. 20% for MS Word, Internet Explorer and Visio, and 13.5% for Outlook. Also it is possible to mark applications in a list for which the AutoZoom program should operate.

The AutoZoom application running on the processor 3 can control the zoom factor of the respective applications, e.g. using a Windows API which would normally be used for the application zoom function control by the keyboard.

In a first embodiment, the zoom parameters X, Y, or X and Y for zooming in, or the zoom parameters V, W or V and W fro zooming out are determined, but now as dynamic detector data, using motion detection, e.g. by having the camera 12 take a still image every second (or every five seconds). If the zoom parameters X, Y, or X and Y are higher than a first threshold value (i.e. the viewing distance is a specific value lower than the calibrated viewing distance), the AutoZoom application sends the positive zoom factor to the relevant application. If the zoom parameters V, W, or V and W are higher than a second threshold value (i.e. the viewing distance is a specific value higher than the calibrated viewing distance), the AutoZoom application sends the negative zoom factor to the relevant application.

In an alternative embodiment, the zoom factor is a zoom rate factor, i.e. the application keeps on receiving the respective zoom data as long as the zoom parameters cross the threshold values. Once the zoom parameters are again below the threshold values, the zoom rate factor is set to zero.

In an even further embodiment, the zoom factor is dependent on the magnitude of the zoom factors X, Y, V, W. Using the calibrated values of the zoom factor X, Y, V, W, the zoom data delivered to the application is an interpolation or extrapolation from the calibrated zoom factors at the calibrated user positions as described above. I.e. at an actual position corresponding to the calibrated position of 10 cm forward the zoom factor is e.g. 30%, and at an actual position of 20 cm forward the zoom factor is 60%.

During the execution of the AutoZoom application, a further condition which is checked before sending zoom data to the application, is whether or not the user 15 looks at the display screen 1. This is determined using the parameters s and t as described with respect to Fig. 6 above. When the parameters s, t or s and t are within predetermined limits (e.g. the detected eye positions are within a square or a circle around the calibrated positions), it is assumed the user 15 is focussing attention on the display screen 1, and the zoom data is calculated according to one of the embodiments described above.

The present invention embodiments have been described above with reference to a computer generated image on the display screen 1. This may take any form of displayed images, including but not limited to office computer applications, gaming computer applications, computer simulation applications (e.g. flight simulation), but also related applications, such as the display of images of a camera mounted in a car or other vehicle (e.g. rear view, dead angle view, etc.) or security camera applications. The zoom property which is determined to control the displayed image may also include an analog signal, e.g. a deflection control signal of a conventional cathode ray tube. The display screen 1 may also be provided in a number of embodiments, including but not limited to a computer screen, television screen, projection screen, etc.

## Claims

1. Method for user interaction with a display screen (1), the display screen (1) displaying an image, the method comprising:
detection of a viewing distance between a user (15) and the display screen (1), adjustment of a zoom property of the displayed image depending on the detected viewing distance.

2. Method according to claim 1, wherein the zoom property of the displayed image is associated with at least one computer application.

3. Method according to claim 1, wherein the zoom property of the displayed image is associated with an operating system.

4. Method according to claim 1, 2 or 3, wherein detection of the viewing distance comprises checking whether attention of the user (15) is focused on the display screen (1).

5. Method according to any one of claims 1 to 4, wherein the adjustment of a zoom property comprises zooming in when the detected viewing distance is lower than a first threshold distance, and zooming out when the detected distance is higher than a second threshold distance.

6. Method according to claim 5, wherein the adjustment of a zoom property further comprises stop zooming when the detected viewing distance is within a predetermined distance range around a calibrated viewing distance.

7. Method according to any one of claims 1-6, wherein the detection of the viewing distance comprises acquiring a pixel image from the user (15), and processing the pixel image to obtain the viewing distance.

8. Method according to claim 7, wherein processing the pixel image comprises measuring pixel distances of body parameters of the user (15).

9. Method according to claim 4, wherein the detection of a viewing distance comprises acquiring a pixel image from the user (15), and processing the pixel image to check whether a detected face part location is within predetermined boundaries of a calibrated face part location.

10. Auto zoom display system, comprising a display screen (1) for displaying an image, and a viewing distance detector (2), the display screen (1) and viewing distance detector (2) being connected to a processing system (3), the processing system (3) being arranged to detect a viewing distance between a user (15) and the display screen (1), and to adjust a zoom property of the displayed image depending on the detected viewing distance.

11. Auto zoom display system according to claim 10, wherein the processing system (3) is further arranged to execute the functionality of any one of the claims 2-6.

12. Auto zoom display system according to claim 10 or 11, wherein the viewing distance detector (2) comprises a camera (12) co-located with the display screen (1) and connected to the processing system (3).

13. Auto zoom display system according to claim 12, in which the processing system (3) is arranged to execute the functionality of any one of the claims 7-9.
